# EUROPEAN PATENT SPECIFICATION

(11) **EP 4 435 294 B1**
(45) Date of publication and mention of the grant of the patent: **05.11.2025**
(21) Application number: 23163370.2
(22) Date of filing: 22.03.2023
(51) Int. Cl.: F16H 57/00, F16H 57/021, F16H 3/08

(54) **A TRANSMISSION COMPRISING A GEARWHEEL ARRANGEMENT, AND A VEHICLE**
EIN GETRIEBE MIT EINER ZAHNRADANORDNUNG, UND FAHRZEUG
UNE TRANSMISSION COMPRENANT UNE ROUE DENTÉE, ET VÉHICULE

(43) Date of publication of application: 25.09.2024
(73) Proprietor: VOLVO TRUCK CORPORATION, 405 08 Göteborg (SE)
(72) Inventor: Folkesson, Johan, 511 62 Skene (SE); Hedman, Anders, 442 67 Marstrand (SE)
(74) Representative: Kransell & Wennborg KB

(56) References cited:
- EP-A1- 2 864 659
- EP-A1- 2 864 660
- EP-B1- 2 864 659
- EP-B1- 2 864 660
- US-A1- 2011 314 940

## Description

### TECHNICAL FIELD

The invention relates to a transmission comprising a gearwheel arrangement. The invention can be applied to heavy-duty vehicles, such as trucks, buses, and construction equipment, among other vehicle types. Although the invention may be described with respect to a particular vehicle, the invention is not restricted to any particular vehicle.

### BACKGROUND

In transmissions, bearings are used for rotatably supporting gearwheels and/or shafts of the transmission against a transmission housing in which the components are arranged, and/or against other shafts of the transmission. The bearings should be configured to allow the gearwheels and/or shafts to rotate while supporting them in a radial as well as an axial direction, i.e., accommodating loads in the radial and the axial directions. A pair of tapered roller bearings, simultaneously providing support in the radial and axial directions, may for example be used to support two gearwheels arranged on a shaft, wherein one of the gearwheels is rotationally fixed on or integrated with the shaft and the other gearwheel is selectively connectable to the shaft via an engaging sleeve. However, in such arrangements, the two bearings are positioned on opposite sides of the two gearwheels and are hence relatively far apart, resulting in high bending stress on the shaft and a risk of misalignment.

In other configurations, pairs of tapered roller bearings may be used to individually support each gearwheel, thereby reducing the bending stress. Tapered roller bearings are relatively strong and cost-effective but require difficult, careful, and timeconsuming axial adjustment, in particular when two pairs of tapered roller bearings are used. Furthermore, the speed capability of arrangements using tapered roller bearings is limited due to the angled rollers. Hence, arrangements using tapered roller bearings are most suitable for applications in which the components rotate with a relatively low rotational speed.

Other known gearwheel arrangements use a combination of a pair of cylindrical roller bearings and a ball bearing arranged on each gearwheel to individually support the gearwheel in the radial and axial directions. However, this leads to rather bulky and expensive arrangements. Document EP2864659A shows a transmission of the prior art.

### SUMMARY

According to the invention, a transmission comprising a gearwheel arrangement according to claim 1 is provided.

A technical benefit may include a relatively high speed capability, since a combination of cylindrical roller bearings supporting radial load, i.e., accommodating load in the radial directions, and a rolling element bearing supporting axial load, i.e., accommodating load in the axial directions, is used, in contrast to tapered roller bearings. The high speed capability renders the gearwheel arrangement suitable for use in electric vehicles, since electric motors are typically operated at a higher rotational speed than combustion engines. Furthermore, a gear arrangement which is relatively easy to adjust, and which is not prone to deformation and bending stress may be achieved, thanks to the combination of the cylindrical roller bearings supporting radial load and the common rolling element bearing supporting axial load of both gearwheels. The common rolling element bearing supporting axial load may preferably be a single rolling element bearing, such as a single ball bearing.

The common rolling element bearing is hence configured to support axial load of both the first gearwheel and the second gearwheel. Since a common rolling element bearing is used to support axial load of both gearwheels, a relatively space- and cost-efficient gear arrangement may be achieved.

The first gearwheel comprises a first set of gear teeth and the second gearwheel comprises a second set of gear teeth, the first and second sets of gear teeth being axially offset from one another. The gearwheel arrangement may thus be configured to transfer torque via two parallel gear planes, wherein the first gearwheel is located in a first gear plane and the second gearwheel is located in a second gear plane parallel to and axially offset from the first gear plane.

An axial side surface of the first gearwheel faces an axial side surface of the second gearwheel, the axial side surfaces being arranged to transfer axial gear mesh force between the first and second gearwheels via axial contact. The axial contact may herein be a direct axial contact between the two axial side surfaces.

The gearwheel arrangement further comprises a fastening member, such as a nut, a screw or a retaining ring, arranged to prevent relative axial movement of the first and second gearwheels, wherein the fastening member is arranged to transfer axial gear mesh force between the first and second gearwheels via axial contact between the fastening member and one of the first and second gearwheels. The gearwheel arrangement may of course comprise more than one fastening member arranged to transfer axial gear mesh forces, depending on the design of the gearwheel arrangement.

The set of bearings are arranged to support the first and second gearwheels against a housing of the transmission, the gearwheel arrangement being arranged within the housing.

The gearwheel arrangement further comprises a first gear engaging sleeve arranged to selectively rotationally connect the first and second gearwheels. The gearwheel arrangement may comprise more than one gear engaging sleeve, such as to selectively rotationally connect one of the gearwheels to a shaft on which the gearwheels are rotatably arranged.

The common rolling element bearing configured to support axial load is a ball bearing. The ball bearing may preferably be an angular contact ball bearing, such as a four-point contact ball bearing. The ball bearing may in some examples be a deep groove ball bearing. The common rolling element bearing configured to support axial load may comprise a single rolling element bearing, such as a single ball bearing. The common rolling element bearing may in other examples comprise a first and a second rolling element bearing mounted together, wherein each bearing is configured to support load in one axial direction of the gearwheel arrangement. In this case, the common rolling element bearing hence comprises two adjacent sets of rolling elements.

In other examples, the common rolling element bearing configured to support axial load may be a cylindrical roller thrust bearing, such as a needle roller thrust bearing.

The second gearwheel is rotatably arranged on an axial rod extension of the first gearwheel. In other examples, including in at least one preferred example, optionally, the first gearwheel is rotatably arranged on an axial rod extension of the second gearwheel. A robust gear arrangement with relatively few parts may thereby be achieved.

The gearwheel arrangement further comprises a shaft on which the first and second gearwheels are arranged. By providing a separate shaft, either rotationally fixed to one of the gearwheels by splines or similar, or rotatable relative to both gearwheels, a cost-efficient gearwheel arrangement may be achieved. The shaft is subjected to relatively low loads in comparison with the gearwheels. A more cost-efficient gearwheel arrangement may thereby be achieved, since material and manufacturing costs of the shaft may be reduced, including, e.g., costs associated with heat treatment and machining.

One of the first and second gearwheels is rotationally fixed to the shaft and the other one of the first and second gearwheels is rotatably arranged on the shaft.

The first and second gearwheels are rotatably arranged on the shaft. Two gear engaging sleeves may be provided, of which one is configured to selectively rotationally connect the first and second gearwheels to one another, and one is configured to selectively rotationally connect one of the gearwheels to the shaft.

The gearwheel arrangement further comprises a second gear engaging sleeve arranged to selectively rotationally connect one of the first and second gearwheels, which is rotatably arranged on the shaft, to the shaft.

The common rolling element bearing configured to support axial load is arranged on the shaft, or on a component axially and preferably rotationally fixed to the shaft.

The common rolling element bearing configured to support axial load is arranged on an axial extension of the first gearwheel. Axial loads may thereby be efficiently absorbed.

The common rolling element bearing configured to support axial load comprises at least one ring member arranged in fixed connection with the first gearwheel. Hence, the at least one inner ring member may be fixed on or integrated with a portion of the gearwheel or on another component fixed to the gearwheel, while an outer ring member of the common rolling element bearing is fixed to a supporting structure, such as a housing of the transmission.

The first gearwheel comprises a first set of gear teeth and first and second axial extensions provided on opposite sides of the first set of gear teeth, wherein the first pair of cylindrical roller bearings comprises a first cylindrical roller bearing arranged on the first axial extension of the first gearwheel, and a second cylindrical roller bearing arranged on the second axial extension of the first gearwheel. Radial loads on the first gearwheel may thereby be efficiently absorbed by the first pair of cylindrical roller bearings.

The second gearwheel comprises a second set of gear teeth and first and second axial extensions provided on opposite sides of the second set of gear teeth, wherein the second pair of cylindrical roller bearings comprises a first cylindrical roller bearing arranged on the first axial extension of the second gearwheel, and a second cylindrical roller bearing arranged on the second axial extension of the second gearwheel. Radial loads on the second gearwheel may thereby be efficiently absorbed by the second pair of cylindrical roller bearings.

A first raceway of each bearing may be fixed to a component of the gearwheel arrangement, such as to one of the gearwheels and/or to a shaft, and a second raceway of each bearing may be fixed to the housing.

According to the invention, a vehicle comprising the transmission according to any one of the claims 1-12 is provided. The vehicle may be a heavy-duty vehicle such as a truck, a bus, or a working machine. The vehicle may in some examples be an at least partially electric vehicle, comprising one or more electric motors for propulsion of the vehicle.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the invention as described herein.

### BRIEF DESCRIPTION OF THE DRAWINGS

Examples are described in more detail below with reference to the appended drawings.
**FIG. 1** is a schematic side view of an exemplary vehicle according to an example.
**FIG. 2** is a schematic sectional view of a gearwheel arrangement according to an example.
**FIG. 3** is a schematic sectional view of a gearwheel arrangement according to another example.
**FIG. 4** is a schematic sectional view of a gearwheel arrangement according to another example.
**FIG. 5** is a schematic sectional view of a gearwheel arrangement according to another example.
**FIG. 6** is a schematic sectional view of a gearwheel arrangement according to another example.
**FIG. 7** schematically illustrates a bearing that may be used in a gearwheel arrangement according to examples of the invention.

The drawings are not necessarily drawn to scale. It shall be understood that the examples shown and described are exemplifying and that the disclosure is not limited to these examples. It shall also be noted that some details in the drawings may be exaggerated in order to better describe and illustrate the examples. Like reference characters refer to like elements throughout the description, unless expressed otherwise.

### DETAILED DESCRIPTION

The detailed description set forth below provides information and examples of the disclosed technology with sufficient detail to enable those skilled in the art to practice the invention.

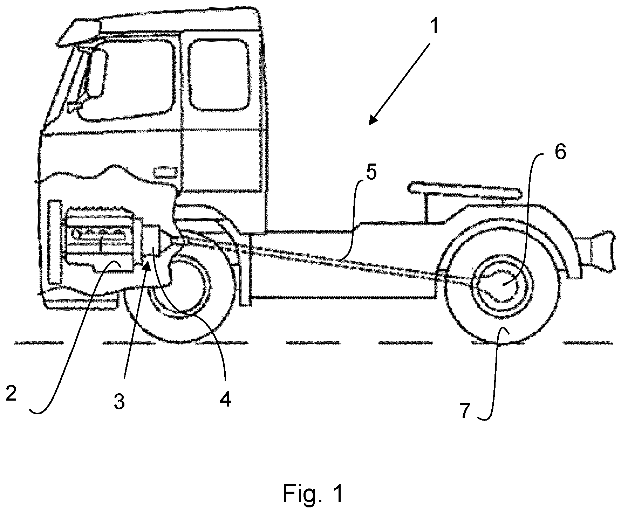

**FIG. 1** illustrates an exemplary vehicle 1 in which a gearwheel arrangement according to an example of the present invention may be used. The vehicle 1 is here a heavy-duty truck, more specifically a towing truck, or tractor, for pulling one or more trailers (not shown). As mentioned in the above, the vehicle may be any type of vehicle, including but not limited to buses, wheel loaders, excavators, passenger cars etc.

The vehicle 1 comprises a propulsion unit 2, which here is an internal combustion engine (ICE), and a transmission 3, comprising a housing 4 in which transmission components are arranged. The transmission 3 is drivingly connected or connectable to the propulsion unit 2 and is arranged to transfer torque from the propulsion unit 2 to a propeller shaft 5 connecting the transmission 3 to a driven axle 6 that drives driven wheels 7 of the vehicle 1. The driven wheels 7 are here rear wheels of the vehicle 1. Even though driven wheels 7 are shown in this example, it shall be understood that any other type of ground engaging means may be used, such as crawler members of an excavator.

Of course, the vehicle may have many different configurations. By way of example, the vehicle may comprise one or more electric propulsion units in addition to, or instead of, the ICE. Furthermore, the transmission 3 does not need to be provided at a front of the vehicle, but may, e.g., be combined with a rear axle of the vehicle.

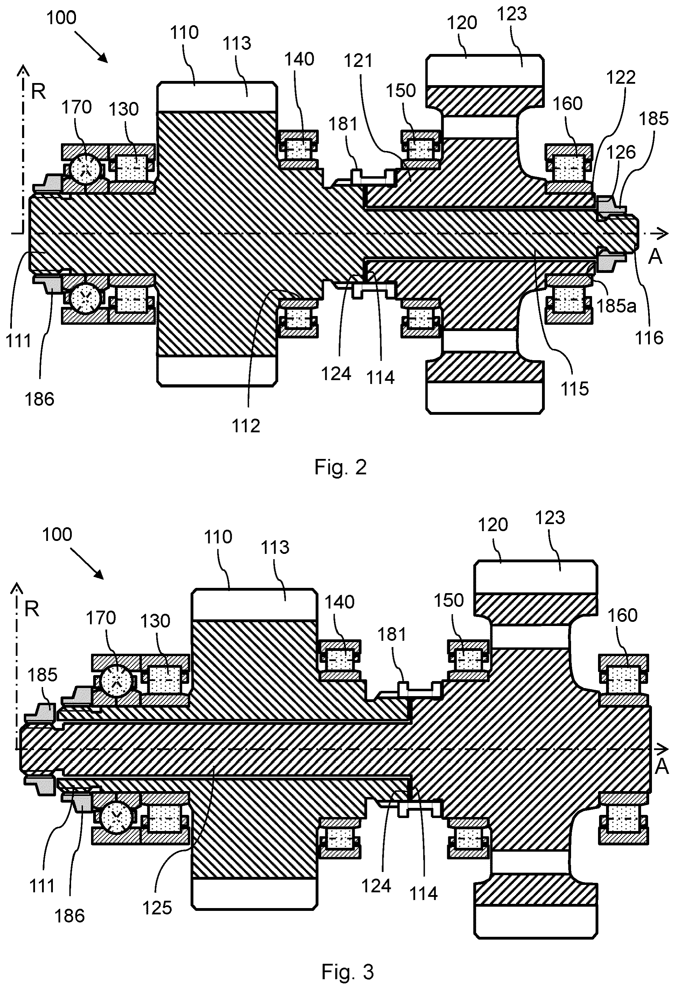

**FIG. 2** illustrates a gearwheel arrangement 100 according to a first example. The gearwheel arrangement 100 is configured to be used in a transmission 3 of a vehicle 1, such as of the vehicle 1 illustrated in **FIG. 1****.** The gearwheel arrangement 100 is configured to form part of the transmission 3, such that torque may be transferred from the propulsion unit 2 to the propeller shaft 5 via the gearwheel arrangement 100.

The gearwheel arrangement 100 comprises a first gearwheel 110 and a second gearwheel 120. The first and second gearwheels 110, 120 are coaxially arranged and selectively rotationally connectable to one another via a first gear engaging sleeve 181, which may be controlled by a shift fork or similar (not shown). The first gearwheel 110 comprises a first set of gear teeth 113 and the second gearwheel 120 comprises a second set of gear teeth 123. The first and second sets of gear teeth 113, 123 are axially offset from one another in an axial direction A, such that two axially spaced gear planes may be achieved.

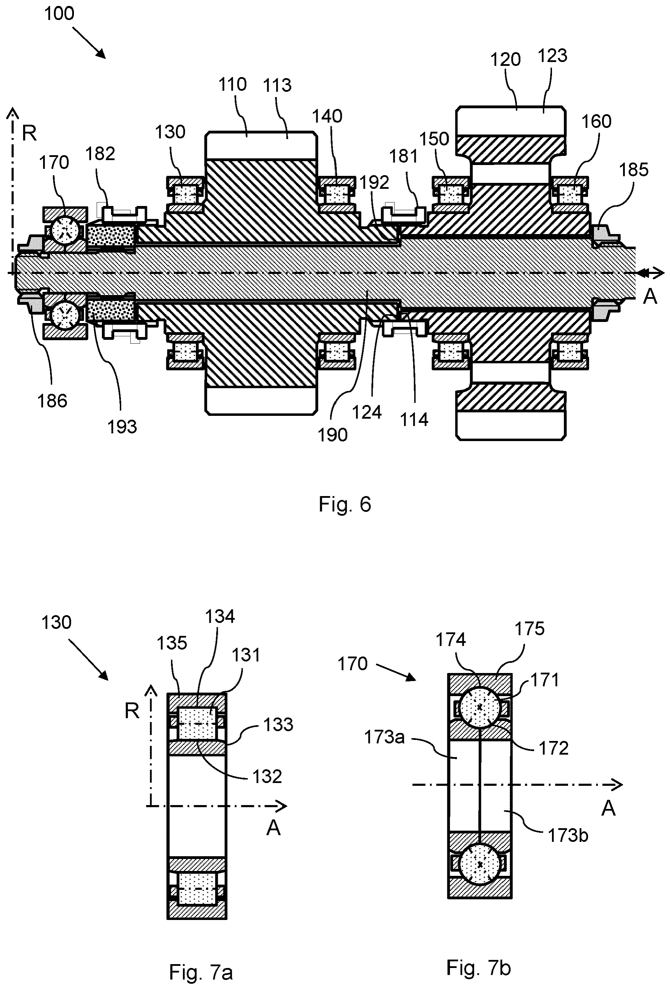

The first and second gearwheels 110, 120 are supported in the housing 4 (see FIG. 1) by a set of bearings 130, 140, 150, 160, 170 that are together configured to support axial and radial loads. The set of bearings 130, 140, 150, 160, 170 comprises a first pair of cylindrical roller bearings 130, 140 configured to support radial load, a second pair of cylindrical roller bearings 150, 160 configured to support radial load, and a single common rolling element bearing 170 configured to support axial load. A cylindrical roller bearing 130 that may be used in any one of the first and/or second pair of cylindrical roller bearings 130, 140, 150, 160 is schematically illustrated in **FIG. 7a****.** It comprises a plurality of cylindrical rollers 131, arranged between an inner raceway 132 formed by an inner ring member 133 and an outer raceway 134 formed by an outer ring member 135. The cylindrical roller bearing 130 is configured to accommodate load in the radial direction R of the gearwheel arrangement 100. The cylindrical roller bearings may preferably be single-row cylindrical roller bearings, but may be any type of cylindrical roller bearings that can accommodate radial loads, including double-row cylindrical roller bearings and needle roller bearings, i.e., cylindrical roller bearings in which the cylindrical rollers have a relatively small diameter.

The first pair of cylindrical roller bearings 130, 140 configured to support radial load are arranged to support the first gearwheel 110 in a radial direction R of the gearwheel arrangement 100. The first pair of cylindrical roller bearings 130, 140 comprises a first cylindrical roller bearing 130 arranged with its inner ring member 133 fixed on or integrated with a first axial extension 111 of the first gearwheel 110, and a second cylindrical roller bearing 140 arranged with its inner ring member 133 fixed on or integrated with a second axial extension 112 of the first gearwheel 110. The first and second axial extensions 111, 112 of the first gearwheel 110 are provided on opposite sides of the first set of gear teeth 113.

The second pair of cylindrical roller bearings 150, 160 configured to support radial load are arranged to support the second gearwheel 120 in the radial direction R. The second pair of cylindrical roller bearings 150, 160 comprises a first cylindrical roller bearing 150 arranged with its inner ring member fixed on or integrated with a first axial extension 121 of the second gearwheel 120, and a second cylindrical roller bearing 160 arranged with its inner ring member fixed on or integrated with a second axial extension 122 of the second gearwheel 120. The first and second axial extensions 121, 122 of the second gearwheel 120 are provided on opposite sides of the second set of gear teeth 123.

In both of the first and second pairs of cylindrical roller bearings 130, 140, 150, 160, the outer ring member 135 is at least radially fixed to the housing 4 (not shown in **FIG. 2**).

The common rolling element bearing 170 configured to support axial load is arranged to support both of the first and second gearwheels 110, 120 in an axial direction A of the gearwheel arrangement 100. The common rolling element bearing 170 configured to support axial load is herein a four-point contact ball bearing, which will hereinafter also be referred to as a ball bearing 170. **FIG. 7b** schematically illustrates such a four-point contact ball bearing 170 that may be used as the common rolling element bearing 170 configured to support axial load according to examples of the present disclosure. The ball bearing 170 comprises a plurality of balls 171, arranged between an inner raceway 172 formed by a first inner ring member 173a and a second ring member 173b, and an outer raceway 174 formed by an outer ring member 175. A dash-dotted cross illustrates the four contact points of the ball bearing 170. By said configuration, the four-point contact ball bearing 170 can accommodate loads in the positive axial direction A as well as in the negative axial direction -A.

The ball bearing 170 is in the example illustrated in FIG. 2 arranged on the first axial extension 111 of the first gearwheel 110, i.e., the inner ring members 173a, 173b are fixed on the first axial extension 111 while the outer ring member 175 is fixed at least axially to the housing 4 (not shown in FIG. 2).

The first gearwheel 110 illustrated in FIG. 2 further comprises an axial rod extension 115, extending beyond the second axial extension 112 in the axial direction A. The second gearwheel 120 is rotatably arranged on the axial rod extension 115.

The gearwheel arrangement 100 further comprises an axial fastening member 185, herein in the form of a first nut, which is fixed at an end 116 of the axial rod extension 115, and which is arranged to prevent relative axial movement of the first and second gearwheels 110, 120. The first nut 185 is arranged to transfer axial gear mesh force between the first and second gearwheels 110, 120 via axial contact between an axial side surface 185a of the first nut 185 and an opposing axial side surface 126 of the second gearwheel 120. Axial gear mesh forces may further be transferred between the first and second gearwheels 110, 120 via axial contact between an axial side surface 114 of the first gearwheel 110 and an opposing axial side surface 124 of the second gearwheel 120.

A second nut 186 is provided for axially securing the ball bearing 170 and the first cylindrical roller bearing 130 on the first axial extension 111 of the first gearwheel 110. The first and second nuts 185, 186 are provided on opposite sides of the first and second sets of gear teeth 113, 123.

When used in a transmission 3, the gearwheel arrangement 100 illustrated in **FIG. 2** may be used to transfer torque via the first gearwheel 110 independently of a position of the first gear engaging sleeve 181, i.e., regardless of whether the first and second gearwheels 110, 120 are connected or not. However, the second gearwheel 120 may only be used to transfer torque when the first gear engaging sleeve 181 is in the position illustrated in **FIG. 2****,** rotationally connecting the first and second gearwheels 110, 120. In this way, it is ensured that the axial side surfaces 114, 124, 126, 185a transferring gear mesh forces do not get overheated due to relative rotation between the first and second gearwheels 110, 120 while the second gearwheel 120 is loaded.

**FIG. 3** illustrates a gearwheel arrangement 100 according to a second example. The gearwheel arrangement 100 illustrated in FIG. 3 is similar to the one illustrated in FIG. 2, but it differs in that the first gearwheel 110, having a first axial extension 111 on which the ball bearing 170 is arranged, is arranged on an axial extension 125 of the second gearwheel 120. The first nut 185 is arranged on the axial extension 125 to prevent relative axial motion between the first and second gearwheels 110, 120, and the second nut 186 secures the ball bearing 170 on the axial extension 125. The first and second nuts 185, 186 are herein provided on a same side of the first and second sets of gear teeth 113, 123, as opposed to the first example.

Similar to the first example, the gearwheel arrangement 100 illustrated in FIG. 3 may be used to transfer torque via the first gearwheel 110 independently of a position of the first gear engaging sleeve 181, i.e., regardless of whether the first and second gearwheels 110, 120 are connected or not. The second gearwheel 120 may only be used to transfer torque when the first gear engaging sleeve 181 is in the position illustrated in FIG. 3, rotationally connecting the first and second gearwheels 110, 120.

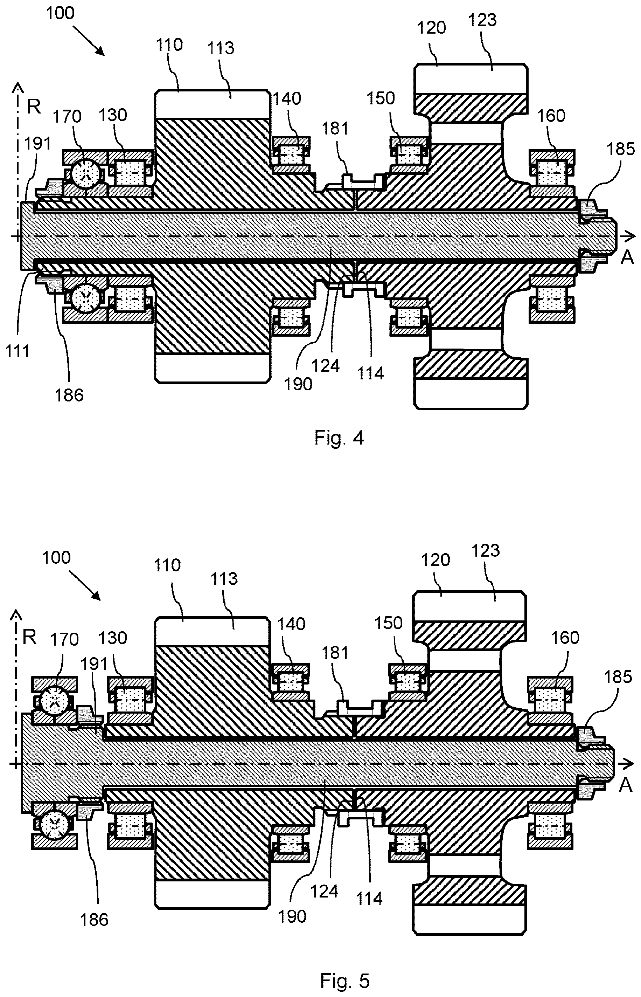

FIG. 4 illustrates a gearwheel arrangement 100 according to a third example, in which both gearwheels 110, 120 are arranged on a separate shaft 190. The shaft 190 may or may not be made from a different material than the gearwheels 110, 120. In some examples, the shaft 190 may be made from a simpler steel material than the gearwheels 110, 120. Both gearwheels 110, 120 may be rotatably arranged on the shaft 190, or one of the gearwheels 110, 120 may be fixed for common rotation with the shaft 190. The first gear engaging sleeve 181 selectively rotationally connects the gearwheels 110, 120. Hence, if one of the gearwheels 110, 120 is fixed for common rotation with the shaft 190, the first gear engaging sleeve 181 may be used to rotationally connect both gearwheels 110, 120 to the shaft 190. Similar to the first and second examples illustrated in **FIGS.** 2 and **3****,** respectively, the ball bearing 170 is arranged on the first axial extension 111 of the first gearwheel 110. The first nut 185 and the second nut 186 are arranged on opposite sides of the gearwheels 110, 120. The first nut 185 prevents relative axial motion between the gearwheels 110, 120 together with a stopping portion 191 of the shaft 190. Hence, axial gear mesh forces are transferred via the axial side surfaces 114, 124 as well as via contacts between the stopping portion 191 and the first gearwheel 110, and between the first nut 185 and the second gearwheel 120, respectively. The second nut 186 fixes the ball bearing 170 on the first axial extension 111 of the first gearwheel 110.

Similar to the first and second examples, the gearwheel arrangement 100 illustrated in FIG. 4 may be used to transfer torque via the first gearwheel 110 independently of a position of the first gear engaging sleeve 181, i.e., regardless of whether the first and second gearwheels 110, 120 are connected or not. The second gearwheel 120 may only be used to transfer torque when the first gear engaging sleeve 181 is in the position illustrated in **FIG. 4****,** rotationally connecting the first and second gearwheels 110, 120.

**FIG. 5** illustrates a gearwheel arrangement 100 according to a fourth example. Similar to the third example, both gearwheels 110, 120 are arranged on a separate shaft 190. However, in contrast to the third example, the ball bearing 170 is arranged on the shaft 190, where it is fixed by the second nut 186. Both gearwheels 110, 120 may be rotatably arranged on the shaft 190, or one of the gearwheels 110, 120 may be fixed for common rotation with the shaft 190. The stopping portion 191 of the shaft 190 together with the first nut 185 prevent relative axial motion of the first and second gearwheels 110, 120. Axial gear mesh forces are transferred via the axial side surfaces 114, 124 as well as via contacts between the stopping portion 191 and the first gearwheel 110, and between the first nut 185 and the second gearwheel 120, respectively.

If the first and second gearwheels 110, 120 are rotatably arranged on the shaft 190, the gearwheel arrangement 100 illustrated in **FIG. 5** may only be used to transfer torque via any one of the first and second gearwheels 110, 120 when the first gear engaging sleeve 181 is in the position illustrated in **FIG. 5****,** rotationally connecting the first and second gearwheels 110, 120. If one of the gearwheels 110, 120 is rotationally and axially fixed to the shaft 190, that one gearwheel may be used to transfer torque independently of a position of the first gear engaging sleeve 181, i.e., regardless of whether the first and second gearwheels 110, 120 are connected or not. The other gearwheel, rotatably mounted on the shaft 190, may only be used to transfer torque when the first gear engaging sleeve 181 is in the position illustrated in **FIG. 5****,** rotationally connecting the first and second gearwheels 110, 120.

**FIG. 6** illustrates a gearwheel arrangement 100 according to a fifth example. Similar to the fourth example, both gearwheels 110, 120 are arranged on a separate shaft 190. Both gearwheels 110, 120 are herein rotatably arranged on the shaft 190. The shaft 190 is herein arranged to be drivingly connected to a power source (not shown) such that power is input to the shaft 190 from a right-hand side of the gearwheel arrangement 100. The gearwheel arrangement 100 of the fifth example differs from the fourth example in that the first gearwheel 110 is selectively rotationally connectable to the shaft 190 via a second gear engaging sleeve 182. Furthermore, the shaft 190 comprises an annular contact surface 192 that together with the axial side surface 124 of the second gearwheel 120 bears against the axial side surface 114 of the first gearwheel 110. A sleeve carrying member 193 is further provided, supporting the second gear engaging sleeve 182 on the shaft 190. Axial gear mesh forces are transferred via the axial side surface 114 on the one hand and the surfaces 124, 192 on the other hand, as well as via contacts between the sleeve carrying member 193 and the first gearwheel 110, and between the first nut 185 and the second gearwheel 120, respectively.

Since the first and second gearwheels 110, 120 are rotatably arranged on the shaft 190, the gearwheel arrangement 100 illustrated in **FIG. 6** may only be used to transfer torque via the first gearwheel 110 when the second gear engaging sleeve 182 rotationally connects the first gearwheel 110 to the shaft 190. Furthermore, the second gearwheel 120 may only be used to transfer torque when the first gear engaging sleeve 181 is in the position illustrated in **FIG. 6****,** rotationally connecting the first and second gearwheels 110, 120. Hence, in order for the second gearwheel 120 to be used for torque transfer, the first gearwheel 110 as well as the second gearwheel 120 must be rotationally connected to the shaft 190.

In all of the above examples, the first pair of cylindrical roller bearings 130, 140 configured to support radial load are arranged on first and second axial extensions 111, 112 of the first gearwheel 110, and the second pair of cylindrical roller bearings 150, 160 configured to support radial load are arranged on first and second axial extensions 121, 122 of the second gearwheel 120 as explained in detail with reference to **FIG. 2****.**

Item 1: A gearwheel arrangement (100) for a transmission (3), comprising:
- a first gearwheel (110) and a second gearwheel (120), the first and second gearwheels (110, 120) being coaxially arranged and selectively rotationally connectable to one another,
- a set of bearings, comprising:
   - a first pair of cylindrical roller bearings (130, 140) configured to support radial load, the first pair of cylindrical roller bearings (130, 140) being arranged to support the first gearwheel (110) in a radial direction (R) of the gearwheel arrangement (100),
   - a second pair of cylindrical roller bearings (150, 160) configured to support radial load, the second pair of cylindrical roller bearings (150, 160) being arranged to support the second gearwheel (120) in the radial direction (R),
   - a common rolling element bearing (170) configured to support axial load, the common rolling element bearing being arranged to support both of the first and second gearwheels in an axial direction (A) of the gearwheel arrangement (100).

Item 2: The gearwheel arrangement of item 1, wherein the first gearwheel (110) comprises a first set of gear teeth (113) and the second gearwheel (120) comprises a second set of gear teeth (123), the first and second sets of gear teeth (113, 123) being axially offset from one another.

Item 3: The gearwheel arrangement according to item 1 or 2, wherein an axial side surface (114) of the first gearwheel (110) faces an axial side surface (124) of the second gearwheel (120), the axial side surfaces (114, 124) being arranged to transfer axial gear mesh force between the first and second gearwheels (110, 120) via axial contact.

Item 4: The gearwheel arrangement according to item 3, further comprising an axial fastening member (185) arranged to prevent relative axial movement of the first and second gearwheels (110, 120), wherein the axial fastening member (185) is arranged to transfer axial gear mesh force between the first and second gearwheels (110, 120) via axial contact between the axial fastening member (185) and one of the first and second gearwheels (110, 120).

Item 5: The gearwheel arrangement of any one of the preceding items, wherein the set of bearings are arranged to support the first and second gearwheels (110, 120) against a housing (4) of the transmission (3), the gearwheel arrangement (1) being arranged within the housing (4).

Item 6: The gearwheel arrangement of any one of the preceding items, further comprising a first gear engaging sleeve (181) arranged to selectively rotationally connect the first and second gearwheels (110, 120).

Item 7: The gearwheel arrangement according to any one of the preceding items, wherein the common rolling element bearing (170) configured to support axial load is a ball bearing, such as a four-point contact ball bearing.

Item 8: The gearwheel arrangement according to any one of the preceding items, wherein the second gearwheel (120) is rotatably arranged on an axial rod extension (115) of the first gearwheel (110), or wherein the first gearwheel (110) is rotatably arranged on an axial rod extension (125) of the second gearwheel (120).

Item 9: The gearwheel arrangement according to any one of items 1-7, further comprising a shaft (190) on which the first and second gearwheels (110, 120) are arranged.

Item 10: The gearwheel arrangement according to item 9, wherein one of the first and second gearwheels (110, 120) is rotationally fixed to the shaft (190) and wherein the other one of the first and second gearwheels (110, 120) is rotatably arranged on the shaft (190).

Item 11: The gearwheel arrangement according to item 9, wherein the first and second gearwheels (110, 120) are rotatably arranged on the shaft (190).

Item 12: The gearwheel arrangement according to item 10 or 11, further comprising a second gear engaging sleeve (182) arranged to selectively rotationally connect one of the first and second gearwheels, which is rotatably arranged on the shaft (190), to the shaft (190).

Item 13: The gearwheel arrangement according to any one of items 9-12, wherein the common rolling element bearing (170) configured to support axial load is arranged on the shaft (190), or on a component rotationally fixed to the shaft (190).

Item 14: The gearwheel arrangement according to any one of items 1-12, wherein the common rolling element bearing (170) configured to support axial load is arranged on an axial extension (111) of the first gearwheel (110).

Item 15: The gearwheel arrangement of any one of the preceding items, wherein the common rolling element bearing (170) configured to support axial load comprises at least one inner ring member (173a, 173b) arranged in fixed connection with the first gearwheel (110).

Item 16: The gearwheel arrangement according to any one of the preceding items, wherein the first gearwheel comprises a first set of gear teeth (113) and first and second axial extensions (111, 112) provided on opposite sides of the first set of gear teeth (113), and wherein the first pair of cylindrical roller bearings (130, 140) comprises a first cylindrical roller bearing (130) arranged on the first axial extension (111) of the first gearwheel (110), and a second cylindrical roller bearing (140) arranged on the second axial extension (112) of the first gearwheel (110).

Item 17: The gearwheel arrangement according to any one of the preceding items, wherein the second gearwheel comprises a second set of gear teeth (123) and first and second axial extensions (121, 122) provided on opposite sides of the second set of gear teeth (123), and wherein the second pair of cylindrical roller bearings (150, 160) comprises a first cylindrical roller bearing (150) arranged on the first axial extension (121) of the second gearwheel (120), and a second cylindrical roller bearing (160) arranged on the second axial extension (122) of the second gearwheel (120).

Item 18: A transmission (3) comprising the gearwheel arrangement (100) according to any one of the preceding items, wherein the transmission (3) is arranged to selectively transfer torque via the first gearwheel (110), and wherein the transmission (3) is further configured to selectively transfer torque via the second gearwheel (120) only when the second gearwheel (120) is rotationally connected to the first gearwheel (110).

Item 19: The transmission according to item 18, further comprising a housing (4) in which the gearwheel arrangement (100) is arranged and against which the set of bearings are arranged to support the first and second gearwheels (110, 120).

Item 20: A vehicle (1) comprising the transmission (3) according to item 18 or 19.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

## Claims

1. A transmission (3) comprising a gearwheel arrangement (100), the gearwheel arrangement (100) comprising:
- a first gearwheel (110) and a second gearwheel (120), the first and second gearwheels (110, 120) being coaxially arranged and selectively rotationally connectable to one another,
- a set of bearings (130, 140, 150, 160, 170), comprising:
- a first pair of cylindrical roller bearings (130, 140) configured to support radial load, the first pair of cylindrical roller bearings (130, 140) being arranged to support the first gearwheel (110) in a radial direction (R) of the gearwheel arrangement (100),
- a second pair of cylindrical roller bearings (150, 160) configured to support radial load, the second pair of cylindrical roller bearings (150, 160) being arranged to support the second gearwheel (120) in the radial direction (R), wherein the transmission (3) is arranged to selectively transfer torque via the first gearwheel (110), and wherein the transmission (3) is further configured to selectively transfer torque via the second gearwheel (120) only when the second gearwheel (120) is rotationally connected to the first gearwheel (110), and **characterized in that** the gearwheel arrangement further comprises
- a common rolling element bearing (170) configured to support axial load, the common rolling element bearing (170) being arranged to support both of the first and second gearwheels (110, 120) in an axial direction (A) of the gearwheel arrangement (100),
wherein the transmission (3) further comprising a housing (4) in which the gearwheel arrangement (100) is arranged and against which the set of bearings (130, 140, 150, 160, 170) are arranged to support the first and second gearwheels (110, 120).

2. The transmission of claim 1, wherein the first gearwheel (110) comprises a first set of gear teeth (113) and the second gearwheel (120) comprises a second set of gear teeth (123), the first and second sets of gear teeth (113, 123) being axially offset from one another.

3. The transmission according to claim 1 or 2, wherein an axial side surface (114) of the first gearwheel (110) faces an axial side surface (124) of the second gearwheel (120), the axial side surfaces (114, 124) being arranged to transfer axial gear mesh force between the first and second gearwheels (110, 120) via axial contact.

4. The transmission according to claim 3, further comprising an axial fastening member (185) arranged to prevent relative axial movement of the first and second gearwheels (110, 120), wherein the axial fastening member (185) is arranged to transfer axial gear mesh force between the first and second gearwheels (110, 120) via axial contact between the axial fastening member (185) and one of the first and second gearwheels (110, 120).

5. The transmission of any one of the preceding claims, further comprising a first gear engaging sleeve (181) arranged to selectively rotationally connect the first and second gearwheels (110, 120).

6. The transmission according to any one of the preceding claims, wherein the common rolling element bearing (170) configured to support axial load is a ball bearing, such as a four-point contact ball bearing.

7. The transmission according to any one of the preceding claims, wherein the second gearwheel (120) is rotatably arranged on an axial rod extension (115) of the first gearwheel (110), or wherein the first gearwheel (110) is rotatably arranged on an axial rod extension (125) of the second gearwheel (120).

8. The transmission according to any one of claims 1-6, further comprising a shaft (190) on which the first and second gearwheels (110, 120) are arranged.

9. The transmission according to claim 8, wherein one of the first and second gearwheels (110, 120) is rotationally fixed to the shaft (190) and wherein the other one of the first and second gearwheels (110, 120) is rotatably arranged on the shaft (190), or
wherein the first and second gearwheels (110, 120) are rotatably arranged on the shaft (190).

10. The transmission according to any one of claims 8-9, wherein the common rolling element bearing (170) configured to support axial load is arranged on the shaft (190), or on a component rotationally fixed to the shaft (190).

11. The transmission according to any one of claims 1-9, wherein the common rolling element bearing (170) configured to support axial load is arranged on an axial extension (111) of the first gearwheel (110).

12. The transmission according to claim 11, wherein the common rolling element bearing (170) configured to support axial load comprises at least one inner ring member (173a, 173b) arranged in fixed connection with the first gearwheel (110).

13. A vehicle (1) comprising the transmission (3) according to any one of the preceding claims.

## Patentansprüche

1. Getriebe (3) mit einer Zahnradanordnung (100), die Zahnradanordnung (100) umfassend:
- ein erstes Zahnrad (110) und ein zweites Zahnrad (120), wobei das erste und das zweite Zahnrad (110, 120) koaxial angeordnet sind und selektiv drehbar miteinander verbunden werden können,
- einen Satz von Lagern (130, 140, 150, 160, 170), umfassend:
- ein erstes Paar von Zylinderrollenlagern (130, 140), die konfiguriert sind, um eine radiale Last zu tragen, wobei das erste Paar von Zylinderrollenlagern (130, 140) so angeordnet ist, dass es das erste Zahnrad (110) in einer radialen Richtung (R) der Zahnradanordnung (100) trägt,
- ein zweites Paar von Zylinderrollenlagern (150, 160), die konfiguriert sind, um eine radiale Last zu tragen, wobei das zweite Paar von Zylinderrollenlagern (150, 160) angeordnet ist, um das zweite Zahnrad (120) in der radialen Richtung (R) zu tragen, wobei das Getriebe (3) angeordnet ist, um selektiv ein Drehmoment über das erste Zahnrad (110) zu übertragen, und wobei das Getriebe (3) ferner konfiguriert ist, um ein Drehmoment über das zweite Zahnrad (120) nur dann selektiv zu übertragen, wenn das zweite Zahnrad (120) drehbar mit dem ersten Zahnrad (110) verbunden ist, und **dadurch gekennzeichnet, dass** die Zahnradanordnung ferner umfasst
- ein gemeinsames Wälzelementlager (170), das konfiguriert ist, um eine axiale Last zu tragen, wobei das gemeinsame Wälzelementlager (170) so angeordnet ist, dass es sowohl das erste als auch das zweite Zahnrad (110, 120) in einer axialen Richtung (A) der Zahnradanordnung (100) trägt, wobei das Getriebe (3) ferner ein Gehäuse (4) umfasst, in dem die Zahnradanordnung (100) angeordnet ist und gegen das der Satz von Lagern (130, 140, 150, 160, 170) angeordnet ist, um das erste und zweite Zahnrad (110, 120) zu stützen.

2. Getriebe nach Anspruch 1, wobei das erste Zahnrad (110) einen ersten Satz von Zahnradzähnen (113) und das zweite Zahnrad (120) einen zweiten Satz von Zahnrädern (123) umfasst, wobei der erste und der zweite Satz von Zahnradzähnen (113, 123) axial zueinander versetzt sind.

3. Getriebe nach Anspruch 1 oder 2, wobei eine axiale Seitenfläche (114) des ersten Zahnrads (110) einer axialen Seitenfläche (124) des zweiten Zahnrads (120) gegenüberliegt, wobei die axialen Seitenflächen (114, 124) so angeordnet sind, dass sie die axiale Zahneingriffskraft zwischen dem ersten und dem zweiten Zahnrad (110, 120) über axialen Kontakt übertragen.

4. Getriebe nach Anspruch 3 ferner umfassend ein axiales Befestigungselement (185), das so angeordnet ist, dass es eine relative axiale Bewegung des ersten und des zweiten Zahnrads (110, 120) verhindert, wobei das axiale Befestigungselement (185) so angeordnet ist, dass es eine axiale Zahneingriffskraft zwischen dem ersten und dem zweiten Zahnrad (110, 120) über einen axialen Kontakt zwischen dem axialen Befestigungselement (185) und dem ersten oder dem zweiten Zahnrad (110, 120) überträgt.

5. Getriebe nach einem der vorhergehenden Ansprüche, ferner umfassend eine erste Zahnradeingriffsmuffe (181), die so angeordnet ist, dass sie das erste und das zweite Zahnrad (110, 120) selektiv drehbar verbindet.

6. Getriebe nach einem der vorhergehenden Ansprüche, wobei das gemeinsame Wälzelementlager (170), das so konfiguriert ist, dass es eine axiale Last trägt, ein Kugellager ist, wie beispielsweise ein Vierpunktlager.

7. Getriebe nach einem der vorhergehenden Ansprüche, wobei das zweite Zahnrad (120) drehbar auf einer axialen Stangenverlängerung (115) des ersten Zahnrads (110) angeordnet ist, oder wobei das erste Zahnrad (110) drehbar auf einer axialen Stangenverlängerung (125) des zweiten Zahnrads (120) angeordnet ist.

8. Getriebe nach einem der Ansprüche 1-6 ferner umfassend eine Welle (190), auf der das erste und das zweite Zahnrad (110, 120) angeordnet sind.

9. Getriebe nach Anspruch 8, wobei eines der ersten und zweiten Zahnräder (110, 120) drehbar an der Welle (190) befestigt ist und wobei das andere der ersten und zweiten Zahnräder (110, 120) drehbar auf der Welle (190) angeordnet ist, oder wobei das erste und zweite Zahnrad (110, 120) drehbar auf der Welle (190) angeordnet sind.

10. Getriebe nach einem der Ansprüche 8-9, wobei das gemeinsame Wälzelementlager (170), das so konfiguriert ist, dass es eine axiale Last trägt, auf der Welle (190) oder auf einer drehbar mit der Welle (190) verbundenen Komponente angeordnet ist.

11. Getriebe nach einem der Ansprüche 1-9, wobei das gemeinsame Wälzelementlager (170), das zur Aufnahme einer Axiallast konfiguriert ist, an einer axialen Verlängerung (111) des ersten Zahnrads (110) angeordnet ist.

12. Getriebe nach Anspruch 11, wobei das gemeinsame Wälzelementlager (170), das zur Aufnahme einer Axiallast konfiguriert ist, mindestens ein Innenringelement (173a, 173b) umfasst, das in fester Verbindung mit dem ersten Zahnrad (110) angeordnet ist.

13. Fahrzeug (1), das das Getriebe (3) nach einem der vorhergehenden Ansprüche umfasst.

## Revendications

1. Transmission (3) comprenant un agencement de roues d'engrenage (100), l'agencement de roues d'engrenage (100) comprenant :
- une première roue d'engrenage (110) et une deuxième roue d'engrenage (120), les première et deuxième roues d'engrenage (110, 120) étant agencées coaxialement et aptes à être reliées sélectivement l'une à l'autre de façon rotative,
- un ensemble de paliers (130, 140, 150, 160, 170), comprenant :
- une première paire de paliers à rouleaux cylindriques (130, 140) configurés pour supporter une charge radiale, la première paire de paliers à rouleaux cylindriques (130, 140) étant conçus pour supporter la première roue d'engrenage (110) dans une direction radiale (R) de l'agencement de roues d'engrenage (100),
- une deuxième paire de paliers à rouleaux cylindriques (150, 160) configurés pour supporter une charge radiale, la deuxième paire de paliers à rouleaux cylindriques (150, 160) étant conçus pour supporter la deuxième roue d'engrenage (120) dans la direction radiale (R), dans laquelle la transmission (3) est conçue pour transférer sélectivement un couple par le biais de la première roue d'engrenage (110), et dans laquelle la transmission (3) est en outre configurée pour transférer un couple par le biais de la deuxième roue d'engrenage (120) uniquement lorsque la deuxième roue d'engrenage (120) est reliée de façon rotative à la première roue d'engrenage (110), et **caractérisée en ce que** l'agencement de roues d'engrenage comprend en outre
- un palier à éléments roulants commun (170) configuré pour supporter une charge axiale, le palier à éléments roulants commun (170) étant conçu pour supporter à la fois la première et la deuxième roue d'engrenage (110, 120) dans une direction axiale (A) de l'agencement de roues d'engrenage (100),
la transmission (3) comprenant en outre un boîtier (4) dans lequel est agencé l'agencement de roues d'engrenage (100) et contre lequel l'ensemble de paliers (130, 140, 150, 160, 170) sont agencés pour supporter les première et deuxième roues d'engrenage (110, 120).

2. Transmission selon la revendication 1, dans laquelle la première roue d'engrenage (110) comprend un premier ensemble de dents d'engrenage (113) et la deuxième roue d'engrenage (120) comprend un deuxième ensemble de dents d'engrenage (123), les premier et deuxième ensembles de dents d'engrenage (113, 123) étant décalés axialement l'un par rapport à l'autre.

3. Transmission selon la revendication 1 ou 2, dans laquelle une surface latérale axiale (114) de la première roue d'engrenage (110) se situe en face d'une surface latérale axiale (124) de la deuxième roue d'engrenage (120), les surfaces latérales axiales (114, 124) étant conçues pour transférer une force d'engrènement axiale entre les première et deuxième roues d'engrenage (110, 120) via un contact axial.

4. Transmission selon la revendication 3, comprenant en outre un élément de fixation axiale (185) conçu pour empêcher un déplacement axial relatif des première et deuxième roues d'engrenage (110, 120), dans laquelle l'élément de fixation axiale (185) est conçu pour transférer une force d'engrènement axiale entre les première et deuxième roues d'engrenage (110, 120) via un contact axial entre l'élément de fixation axiale (185) et l'une parmi les première et deuxième roues d'engrenage (110, 120).

5. Transmission selon l'une quelconque des revendications précédentes, comprenant en outre un premier manchon d'engagement d'engrenage (181) conçu pour relier sélectivement les première et deuxième roues d'engrenage (110, 120) de façon rotative.

6. Transmission selon l'une quelconque des revendications précédentes, dans laquelle le palier à éléments roulants commun (170) configuré pour supporter une charge axiale est un roulement à billes, tel qu'un roulement à billes à contact à quatre points.

7. Transmission selon l'une quelconque des revendications précédentes, dans laquelle la deuxième roue d'engrenage (120) est agencée de façon rotative sur une extension de tige axiale (115) de la première roue d'engrenage (110), ou dans laquelle la première roue d'engrenage (110) est agencée de façon rotative sur une extension de tige axiale (125) de la deuxième roue d'engrenage (120).

8. Transmission selon l'une quelconque des revendications 1 à 6, comprenant en outre un arbre (190) sur lequel les première et deuxième roues d'engrenage (110, 120) sont agencées.

9. Transmission selon la revendication 8, dans laquelle l'une parmi les première et deuxième roues d'engrenage (110, 120) est fixée de façon rotative à l'arbre (190) et dans laquelle l'autre parmi les première et deuxième roues d'engrenage (110, 120) est agencée de façon rotative sur l'arbre (190), ou
dans laquelle les première et deuxième roues d'engrenage (110, 120) sont agencées de façon rotative sur l'arbre (190).

10. Transmission selon l'une quelconque des revendications 8 à 9, dans laquelle le palier à éléments roulants commun (170) configuré pour supporter une charge axiale est agencé sur l'arbre (190), ou sur un composant fixé de façon rotative à l'arbre (190).

11. Transmission selon l'une quelconque des revendications 1 à 9, dans laquelle le palier à éléments roulants commun (170) configuré pour supporter une charge axiale est agencé sur une extension axiale (111) de la première roue d'engrenage (110).

12. Transmission selon la revendication 11, dans laquelle le palier à éléments roulants commun (170) configuré pour supporter une charge axiale comprend au moins un élément de bague intérieur (173a, 173b) agencé en liaison fixe avec la première roue d'engrenage (110).

13. Véhicule (1) comprenant la transmission (3) selon l'une quelconque des revendications précédentes.
